# EUROPEAN PATENT APPLICATION

(11) **EP 2 409 750 A1**
(43) Date of publication of application: **25.01.2012**
(21) Application number: 10007618.1
(22) Date of filing: 22.07.2010
(51) Int. Cl.: B01D 29/35, B02C 18/12, B07B 1/20, B07B 13/16, B08B 9/08, B02C 18/00

(54) **Filter for a feeding system for liquids with tendency to form sediments, in particular for a crude oil washing system**

(71) Applicant: Marinvent GmbH, 21521 Dassendorf (DE)
(72) Inventor: Tokic, Tonci, 21 000 Split (HR)
(74) Representative: Emmel, Thomas

(57) **Abstract**

The invention relates to a filter (10) for a feeding system for liquids with tendency to form sediments, in particular for a crude oil washing system, the filter (10) being adapted to be inserted into a filter casing (11) provided in a feed line of the feeding system and allowing only the passage of the liquid comprising particles of small diameter, the filter (10) having a hollow filter body (16) with side walls (17) and a bottom portion (18), an inlet (14) being in fluid communication with the feed line (12), pores (20) provided in at least a portion of the side walls (17) allowing the passage of the liquid from the inside of the filter body (16) into the surrounding filter casing (11), and is characterized by a rotor (30) located at the bottom portion /18) of the filter body (16) arranged for rotation at high speed, and a sieve plate (31) located above the rotor (30) and extending over a portion of the filter body (16) diameter, the position of the plate (31) and its distance to the rotor (30) being chosen such, that the liquid directed upwards by the rotating rotor (30) is pressed under high speed against the sieve plate (31).

## Description

The present invention pertains to a filter for systems in which liquids are transported which include sediments or show the tendency to form sediments. One main aspect of the invention are feeding systems in which oil is transported. In particular the invention pertains to a filter for a crude oil washing system.

In the following the invention will be mainly discussed by referring to crude oil washing systems which however does not mean that the filter covered by the invention cannot be used in other applications in which similar problems to those in crude oil washing systems arise.

Crude oil washing systems are used for removing sludge accumulated in tanks used for storage or transportation of crude oil. An example for such a system is disclosed in EP 0409868 B1. This document also discusses other prior art.

It is conventional practice to fill crude oil as it is extracted from the ground (i.e. without further treatment) into storage or transportation tanks. Crude oil as a natural product includes substances which during storage form sediments. The nature of the sediment depends on the type of crude oil. It may be constituted by deposited asphalts or paraffins. It may, however, also consist of thickened crude oil fractions.

The sediments form a kind of sludge or sediment layer in the tank. Depending on storage time etc. such sludge or sediment layers may reach a thickness of 1 to 1.5 meters in usual tanks, thereby reducing the tank capacity and presenting constant problems for e.g. the pumps used to move the crude oil. Crude oil often contains additional particles collected from the port of loading.

One commonly used method to remove the sludge from a tank is the above mentioned so-called crude oil washing (COW) which uses the crude oil itself for washing out the sludge residues from the tanks of e.g. an oil tanker. The crude oil is sprayed via high pressure nozzles mounted in the cargo tanks onto the inner walls, thereby crushing and liquefying the sludge, which then can be discharged together with the crude oil used for washing from the tank. Modem oil tankers are always equipped with such COW systems.

The use of crude oil as washing substance has a number of advantages. One main advantage is that at least portions of the sludge re-dissolve in crude oil, especially if the crude oil is preheated, and as such may form a liquid and pumpable fraction (together with the crude oil used for washing) which can be used in further processing in a refinery and which reduces cargo loss and cargo remaining on board (the ROB).

Usual crude oil washing systems of e. g. an oil tanker use the crude oil cargo itself, i.e. the crude oil for washing empty tanks is taken from other tanks still filled.

One problem connected to crude oil washing is that the crude oil used for washing also contains sludge particles and the like. These particles can interfere with the working of the high-pressure pumps and especially with the nozzles. The washing result is negatively affected by this particles, or particles ejected under pressure may cause damage to the tank cleaning equipment.

For that reason conventional crude oil washing systems are equipped with a filter which removes the sediment from the crude oil before it reaches the tank cleaning machines, especially the nozzles.

Usual filters include a hollow cylindrical filter body which may be inserted into a filter casing provided in the washing system. The filter body has a side wall and a bottom portion with at least the side wall being provided with pores. The dimensions of the filter are such that when inserted into the casing there remains a surrounding gap between filter and inner wall of the casing.

The filter casing has an inlet communicating with an outlet of the feeding line and the inside of the filter body and an outlet communicating with an inlet of the feeding line and the gap between filter body and the wall of the casing.

In process, the whole system comprising feeding line and filter casing is under high pressure, depending on vessel size and system layout typical pressures are between 7 to 16 bar, but higher or lower pressures are possible, too. A continuous flow of liquid is achieved by external pumps pumping the liquid in the feeding system.

However, it has turned out that due to the relative high amount of sediment in crude oil, the known filters often get choked during the washing process which requires frequent operation interruptions and replacement or cleaning etc. of the filter. This is time consuming, and is impairing the washing process and the washing result.

It is an object of the invention to provide a filter with improved properties.

The object of the invention is obtained with a filter having the features as stated in claim 1.

Like known filters also the filter according to the invention has a filter body which preferably has the same or similar dimensions as known filters. This means that a filter according to the invention can be inserted into the known filter casings in crude oil washing systems. If no filter casings are existent in the feeding system, the filter of course can be equipped with a separate filter casing, the filter casing then being part of the filter according to the present invention.

Furthermore also the filter according to the invention has a hollow, especially cylindrical or conical filter body, with a side wall and a bottom portion, an inlet being in fluid communication with the feed line, and pores provided in at least a portion of the side wall allowing the passage of crude oil from the inside of the filter body into the surrounding filter casing.

In contrast to known filters the invention provides a rotatable stirring member, for example a propeller or turbine or the like, in the following all covered by the term *rotor,* located at the bottom portion of the filter body and designed for rotation at high speed. The rotor preferably is attached to the bottom, but it is also possible to attach the rotor to the side walls, for example using a supporting arm. A sieve plate is located above the rotor and is extending over a portion of the filter body diameter, preferably over a portion ranging from ¼ to ½ of the diameter. The position of the plate and its distance to the rotor is chosen such that crude oil including the sediment directed upwards by the rotor at least partially is pressed under high speed against the sieve plate, or in other words, the particles contained in the crude oil are directed with high velocity onto the sieve plate. To allow the rotating member of the rotor to rotate freely there is some clearance provided between rotating member and the bottom, which, depending on the proportions of the filter, in practice will be e.g. in the range of centimeters. Rotor and sieve plate are arranged in the lower portion of the filter, in general in the lower third of the filter provided that inlet and outlet do not demand other arrangements.

It is the theory of the applicants that the interaction between rotor and sieve plate leads to the crushing of the sludge or sediment contained in the crude oil intended for washing. The sludge or sediment thus reduced in its particle size can leave the filter body via the pores in the side wall. The size of the pores is selected such, that particles which can leave the filter body through the pores will not have any detrimental effect on components of the washing system. Typical nozzle sizes might be eight to twelve millimeters, and the pore sizes therefore should be smaller, but other nozzle sizes and pore sizes are possible.

The filter according to the invention accordingly effects a kind of homogenizing action, i.e. the sediment or sludge particles included in the crude oil stream fed into the filter are reduced to such extent in their size that they do not disturb the washing process any more which can run more effective and without any clogging, damage and stoppage.

As one can easily imagine the amount of sediment or sludge particles which finally is retained in the filter body is much smaller than in conventional filters which do not homogenize the sludge.

The filter according to the invention therefore must be cleaned or replaced only rarely, which is an important advantage over the prior art. The cleaning results are much better because the filtered crude oil stream is homogenized and the washing process can run without interruptions. The percentage of sediment in the tank is significantly decreased lowering the ROB, and also the quantity of potential particles that could cause damage to the tank cleaning machines is decreased.

Preferred embodiments of the invention are covered by the sub-claims.

As stated above the homogenizing action of the filter according to the invention most probably is due to the interaction of rotor and sieve plate. When rotating at high speed the rotor pushes the crude oil upwards against the sieve plate. Crushing of the sediment is caused by the rotor and/or upon contact of the sediment with the sieve plate. The rotor furthermore prevents sedimentation in the filter.

A portion of the crude oil including sediments crushed to a small particle size will be pressed through the sieve plate. Another portion of the crude oil including sediment of taller size will be reflected from the sieve plate to the rotor, redirected from the rotor to the sieve plate, and the process begins again.

In a preferred embodiment of the invention a deflecting means is provided in the filter body which is directing the crude oil entering the filter towards the rotor. In this embodiment the high pressure crude oil stream entering the filter body is directly targeted onto the rotor which makes the working of the filter more effective.

As stated above the rotor is able to rotate at a high speed. It can be driven by an external motor. Preferably, however, the rotor or the blades of the rotor are shaped and arranged such that it can be rotated by the crude oil stream directed towards the rotor. It has turned out that if the crude oil stream is targeted correctly and the inclination of the rotor blades matches to the impinging angle of the stream, a rotation of the rotor at high speed may be effected without the need of any external motor driving the rotor. Especially preferred is an angle between surface of the blade and deflected oil stream in the range of 90°. This embodiment is especially preferred as it does not need any external components like a motor or the like making the filter inexpensive. But of course additional external motors are an option according to this invention.

In a preferred embodiment the rotor is not arranged in the center of the bottom of the filter but is moved in a direction away from the sieve plate in an of center position which allows better access to direct the crude oil towards the rotor.

A further embodiment of the invention finally provides that the edges of the rotor are sharpened, thus increasing the crushing action of the rotor.

The explanations given for crude oil also apply for the feeding of other liquids with similar properties, that is for other liquids with the tendency to form sediments, and which sometimes have to be pumped from one reservoir to another reservoir.

The invention shall be further exemplified by means of one figure which shows a filter according to a possible embodiment of the invention.

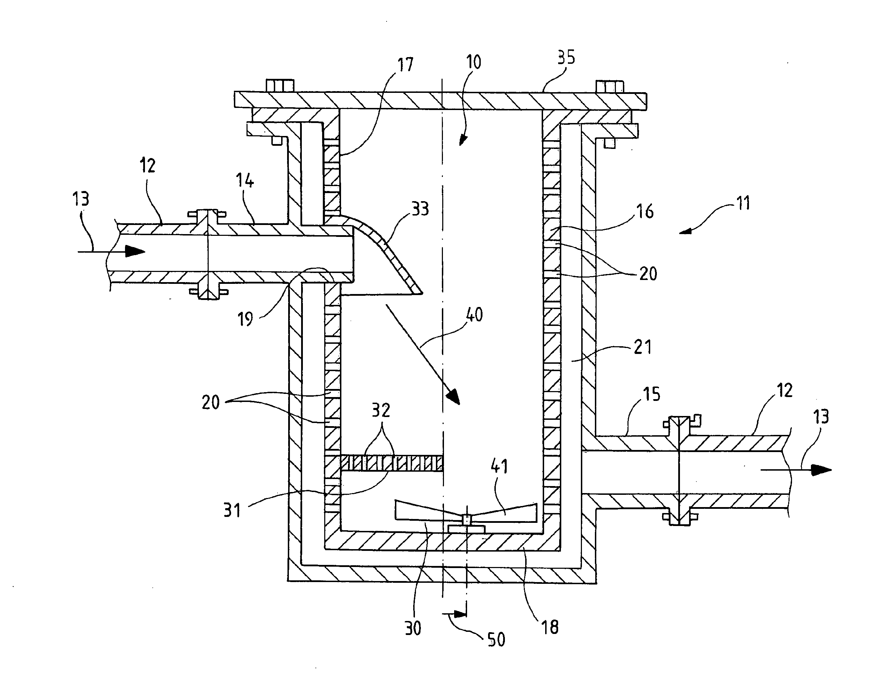

In the figure a filter 10 is represented which is inserted into a filter casing 11 of a crude oil washing system. Typical dimensions of such filter casings are heights of one meter and diameters of fifteen to fifty centimeters, but these dimensions may strongly vary.

The filter casing 11 is mounted into a feeding line 12 (shown only partially) in which crude oil is transported in direction of the arrow 13. The feeding line 12 is connected with an inlet 14 and an outlet 15 of the filter casing 11. Typical feeding lines have diameters of fifteen to thirty centimeters, and three hundred to twelve hundred cubic meters of crude oil per hour may pass continuously the inlet 14 and the outlet 15. Also here these indications are not meant to limit the scope of protection but to give an indication about typical sizes.

Filter 10 has a hollow cylindrical filter body 16 with a side wall 17 and a bottom portion 18. The side wall 17 has an opening 19 through which the inlet 14 of the filter casing 11 may be inserted into the filter body 16.

The filter body 16 furthermore has pores 20 in its side wall 16 which allow a liquid communication between the inside of the filter body 16 and a gap 21 provided between filter casing 11 and filter 10. The gap for example might be five to ten centimeters.

In the bottom portion 18 of the filter body 16 a propeller 30 having a plurality of blades 41 is provided. Above the propeller 18 a stiff sieve plate 31 covering a portion of the diameter of the filter body 16 is mounted to the side wall 16 of the filter body 16. The sieve plate 16 is provided with pores 32, in particular with pores of different sizes. For example one third of the diameter may be covered by the sieve plate, which for example might have a sickle-shaped form.

Finally a deflecting member 33 is provided on the side wall 16 of the filter body which communicates with the hole 19 respectively the inlet 14 of the filter casing inserted into the hole.

As can be furthermore seen from the figure the filter 10 can be inserted into the filter casing 11 from above. Once inserted it is secured to the casing 11 by a high pressure plate 35.

In process crude oil is pumped under high pressure (for example seven to sixteen bar) from the feeding line 12 through the inlet 14 of the filter casing 11 via the deflector 33 into the inside of filter body 16.

The deflector 33 directs a crude oil stream 40 towards the blades 41 of the propeller 30. Upon contact of the high pressure crude oil stream 40 with the blades 41 the propeller 30 begins to rotate, with the rotational speed depending on the speed and pressure of stream 40 and the inclination of the blades.

The rotating propeller 30 ejects the crude oil against the sieve plate 31. Some of the crude oil will pass the pores 32 of the plate 31 and the rest will be reflected to the propeller 30, which then again presses the crude oil against the plate 31.

As indicated by arrow 50 the propeller 30 is arranged eccentrically, that is he is moved from the center in a direction away from the sieve plate 31.

Once the size of the particles contained in the crude oil stream 40 has been diminished by contact with the propeller 30 and/or the sieve plate 31 to a size smaller than the pores 20 provided in the side wall 17 of the filter 10, they can be transported by liquid crude oil fractions from the filter 10 into the surrounding gap 21. From the gap 21 the filtered/homogenized crude oil will be discharged via outlet 15 into the feeding line 12 which then transports the homogenized crude oil to the nozzles or other components of the washing system.

In an alternative embodiment (not shown) the bottom of the filter may be detachably mounted to allow access to the filter from the bottom, for example to allow propeller exchange. The bottom might be secured by screws, or bottom and filter might be equipped with threads allowing the bottom to be screwed into the filter.

## Claims

1. Filter (10) for a feeding system for liquids with tendency to form sediments, in particular for a crude oil washing system, the filter (10) being adapted to be inserted into a filter casing (11) provided in a feed line of the feeding system and allowing only the passage of the liquid comprising particles of small diameter, the filter (10) having a hollow filter body (16) with side walls (17) and a bottom portion (18), an inlet (14) being in fluid communication with the feed line (12), pores (20) provided in at least a portion of the side walls (17) allowing the passage of the liquid from the inside of the filter body (16) into the surrounding filter casing (11), **characterized by** a rotor (30) located at the bottom portion (18) of the filter body (16) arranged for rotation at high speed, and a sieve plate (31) located above the rotor (30) and extending over a portion of the filter body (16) diameter, the position of the plate (31) and its distance to the rotor (30) being chosen such, that the liquid directed upwards by the rotating rotor (30) is pressed under high speed against the sieve plate (31).

2. Filter (10) according to claim 1, the filter (10) being arranged in a crude oil washing system, said system being used for removing sludge accumulated in a crude oil tank and comprising at least one nozzle which is supplied via a feed line with crude oil under high pressure, the filter allowing only the passage of crude oil comprising sludge particles of small diameter which do not interfere with the components, especially the nozzle of the system and the inner parts of the tank cleaning machines (gear).

3. Filter according to claim 1 or 2, **characterized in that** a deflecting member (33) is arranged above the inlet (14) to target the liquid towards the rotor (30).

4. Filter according to claim 3, **characterized in that** the rotor (30) is driven by the liquid stream directed by the deflector (33) towards the rotor (30).

5. Filter according to one of the preceding claims, **characterized in that** the inclination angle of the blades (41) of the rotor (30) is perpendicular to the direction of the liquid stream.

6. Filter according to one of the preceding claims, **characterized in that** the sieve plate (31) has pores of different sizes.

7. Filter according to one of the preceding claims, **characterized in that** the rotor (31) has blades (41) with sharpened edges.

8. Filter according to one of the preceding claims, **characterized in that** the rotor (30) is arranged eccentrically away from the sieve plate (31).

9. Feeding system for liquids with tendency to form sediments, in particular a crude oil washing system, with a filter in a feed line of the feeding system allowing only the passage of the liquid comprising particles of small diameter which do not interfere with the components of the system, **characterized by** a filter according to one of the preceding claims.
